# EUROPEAN PATENT APPLICATION

(11) **EP 3 075 895 A1**
(43) Date of publication of application: **05.10.2016**
(21) Application number: 16162845.8
(22) Date of filing: 30.03.2016
(51) Int. Cl.: D06F 37/20, D06F 33/02, D06F 37/26

(54) **DRUM TYPE WASHER AND CONTROL METHOD THEREOF**

(30) Priority: 31.03.2015 KR 20150045238
(71) Applicant: LG Electronics Inc., Seoul 07336 (KR)
(72) Inventor: SONG, Hamin, 08592 Seoul (KR); LEE, Chungill, 08592 Seoul (KR)
(74) Representative: Vossius & Partner Patentanwälte Rechtsanwälte mbB

(57) **Abstract**

Drum type washer and control method thereof, wherein the spin-drying performance is enhanced by determining a position and a degree of unbalance using the phase and the magnitude of a signal input through a vibration measuring device (41) located at a first half portion and a second half portion of a tub (40).

## Description

### CROSS-REFERENCE TO RELATED APPLICATION(S)

This application claims priority under 35 U.S.C. §119 and 35 U.S.C. §365 to Korean Patent Application No. 10-2015-0045238, filed in Korea on March 31, 2015, whose entire disclosure is hereby incorporated by reference.

### BACKGROUND

### 1. Field

A drum type washer and a control method thereof are disclosed herein.

### 2. Background

Generally, a washer is an appliance in which a user puts contaminated laundry into a washing tub, and a washing stroke is performed while a detergent and washing water are appropriately mixed, and a washing operation is completed through a rinsing stroke and a spin-drying stroke.

And a drum type washer has a structure in which the washing operation is performed while a drum in which the laundry is put is horizontally rotated. In an operating process of the drum type washer, first, when the user puts the laundry in the drum, and then turns on a start switch, a control part detects a weight of the laundry put in the drum, determines an appropriate amount of water corresponding to the weight of the laundry, and starts water supply.

When the water supply is performed and the water reaches a water level preset at a water storage tub which surrounds the drum, the drum is rotated by driving of a motor, and thus the washing operation is performed by a fall of the laundry. The washing operation is performed for a period of time set depending on the weight of the laundry.

Then, when the washing stroke is completed, the spin-drying stroke is performed together with a draining operation in which the contaminated washing water in the water storage tub is discharged to an outside by a drainage pump, and the water supply and the washing stroke are repeated predetermined times. Also, when the washing stroke is completed, the rinsing stroke and the spin-drying stroke are performed.

When the laundry is concentrated to one side of the drum which is rotated at a high speed for the spin-drying stroke, a rotating center shaft of the drum is deviated from a center and is eccentric, and thus vibration occurs. Due to such vibration, a life span of the washer is reduced, and a noise is generated, and also a sufficient spin-drying effect may not be obtained.

To solve the problems, in Korean Patent Publication No.10-2008-0086308, there is disclosed a drum type washer in which unbalance is controlled through a sum and a difference of signals detected from a plurality of acceleration sensors attached to a side surface of a tub of the washer, and a noise and a spin-drying time are reduced.

However, in the drum type washer according to the prior art, a size of the vibration may be obtained through a degree of the unbalance obtained using the plurality of acceleration sensors. However, an exact position of the unbalance may not be obtained with such a simple structure using the sum and the difference.

### SUMMARY

The present invention is directed to a drum type washer in which a position and a degree of unbalance are determined using a phase and a size of a signal input through a vibration measuring device located at each of a first half portion and a second half portion of an outer side surface of a tub, and thus spin-drying performance and efficiency are enhanced, and a control method thereof.

According to an aspect of the present invention, there is provided a drum type washer which includes a cabinet (10) configured to form an external appearance, a tub (40) installed and fixed to an inside of the cabinet (10), a motor (30) rotatably provided at the tub (40), and a drum (20) disposed inside the tub (40) to accommodate laundry and rotated by the motor (30), characterized by including a vibration measuring device (41) provided at a first half portion and a second half portion of an outer surface of the tub (40), and configured to output a signal measured when the tub (40) is vibrated; and a control part (50) configured to calculate and process the signal transferred from the vibration measuring device (41), to calculate a degree of unbalance through an amplitude, and to calculate a position of the unbalance through a phase difference, wherein, when the degree of the unbalance and the position of the unbalance does not satisfy a preset reference, the control part (50) stops driving of the motor (30), and shorts starting of a spin-drying operation.

The vibration measuring device (41) may be one of an acceleration sensor and an optical sensor.

The vibration measuring device (41) may include a front sensor (411) which is disposed at a first half portion of the tub (40); and a rear sensor (412) which is disposed at a second half portion of the tub (40), and the front sensor (411) and the rear sensor (412) may be disposed on the same extension line.

The vibration measuring device (41) may include a plurality of sensors, and the plurality of the sensors may be disposed on the same extension line around the tub (40).

The vibration measuring device (41) may include a plurality of front sensors (411) which are disposed along a circumference of a first half portion of the tub (40); and a plurality of rear sensors (412) which are disposed along a circumference of a second half portion of the tub (40).

The vibration measuring device (41) may further include a low pass filter (413) which filters each of values measured from the front sensors (411) and the rear sensors (412) into a certain frequency.

When the control part (50) calculates the phase difference, and the phase difference of a load is equal to or more than a present angle, it may be determined that the load in the drum (20) is diagonally distributed.

The drum type washer may further include an output means (141), such as a display or a speaker, which is connected to the control part (50) and displays an unbalanced state to an outside when a load of the laundry is in the unbalanced state.

The control part (50) may determine that a load from the vibration measuring device (41) is in an unbalanced state before the washer (1) starts a spin-drying operation.

According to another aspect of the present invention, there is provided a method of controlling a drum type washer, including driving a motor (30) which rotates a drum (20) in which laundry is accommodated [S100]; measuring vibration of a tub (40), in which the drum (20) is accommodated, through a vibration measuring device (41) provided at each of a first half portion and a second half portion of the tub (40) [S200]; calculating a degree and a phase of unbalance of a load by processing and calculating a measured signal [S300]; and comparing the calculated degree and phase of the unbalance with a preset spin-drying operation starting reference [S400], wherein, in the operation S400, when the reference is not satisfied, an operation [S500] of shortin a spin-drying operation is performed, and when the reference is satisfied, an operation [S600] of performing the spin-drying operation is performed.

In the operation S400, when a phase difference calculated in the operation S300 is equal to or more than a present angle, it may be determined that a load of laundry is diagonally distributed in the drum (20), and the spin-drying operation is shorted.

In the operation S500, a fact that a load of laundry is in an unbalanced state may be output to a user through an output means (141).

The operation S400 may be in a low-speed rotation state before the spin-drying operation is started or at an early stage after the spin-drying operation is started.

In the operation S300, a degree of the unbalance of the load may be calculated through an amplitude measured by the vibration measuring device (41).

In the operation S300, a signal input from the vibration measuring device (41) which is disposed on the same extension line around the tub (40) may be measured and processed.

The details of one or more embodiments are set forth in the accompanying drawings and the description below. Other features will be apparent from the description and drawings, and from the claims.

### BRIEF DESCRIPTION OF THE DRAWINGS

Embodiments will be described in detail with reference to the following drawings in which like reference numerals refer to like elements, and wherein:
FIG. 1 is a perspective view of a washer according to an embodiment of the present invention;
FIG. 2 is a longitudinal cross-sectional view of the washer;
FIG. 3 is a view illustrating an upper surface inside the washer;
FIG. 4 is a block diagram illustrating a control signal flow in the washer;
FIG. 5 is a flowchart sequentially illustrating an operation of the washer;
FIGS. 6A and 6B are graphs illustrating an unbalanced state measured by a vibration measuring device of the washer; and
FIG. 7 is a graph illustrating a distribution of the unbalance measured by the vibration measuring device.

### DETAILED DESCRIPTION

Reference will now be made in detail to the embodiments of the present disclosure, examples of which are illustrated in the accompanying drawings. The invention may, however, be embodied in many different forms and should not be construed as being limited to the embodiments set forth herein; rather, alternative embodiments included in other retrogressive inventions or falling within the spirit and scope of the present disclosure can easily be derived through adding, altering, and removing, and will fully convey the concept of the invention to those skilled in the art.

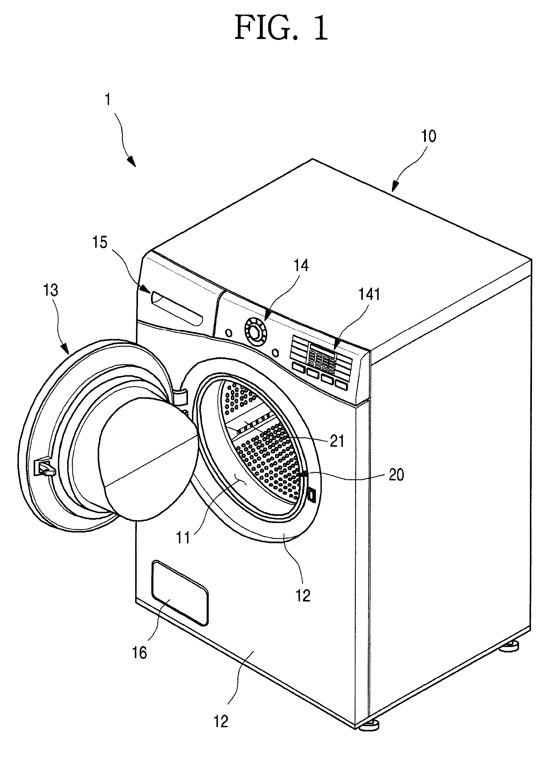

FIG. 1 is a perspective view of a washer according to an embodiment of the present invention.

Referring to FIG. 1, a washer 1 according to an embodiment of the present invention includes a cabinet 10 which forms an exterior of the washer 1, a drum 20 which is rotatably installed inside the cabinet 10 and in which laundry is put, a lifter 21 which is installed at an inner side surface of the drum 20 and lifts the laundry so that the laundry falls down at a predetermined height by gravity, and a motor 30 which is installed at a rear portion of the drum 20 and generates a rotating force of the drum 20.

A front cover 12 in which a laundry entrance 11 is formed at a center thereof is installed at a front surface of the cabinet 10, and a door 13 which opens and closes the laundry entrance 11 is rotatably installed at the front cover 12.

A control panel 14 is provided at an upper end of the front surface of the cabinet 10. The control panel 14 may have a plurality of buttons or knobs which control an operation of the washer 1, and may also include a display 141 which displays an operating state of the washer 1.

A detergent drawer 15 may be further provided at the upper end of the front surface of the cabinet 10. The detergent drawer 15 is provided at a lateral side of the control panel 14, and may be formed so that a portion in which a detergent is put and stored and a portion which is exposed to the front surface are integrally formed, or may be formed so that a portion which forms at least a part of the front surface is provided as a separate component, and then coupled.

A service cover 16 may be further provided at a lower end of the front surface of the cabinet 10. The service cover 16 is formed to be opened while the washer 1 is stopped, and to allow remaining water in the washer 1 to be removed.

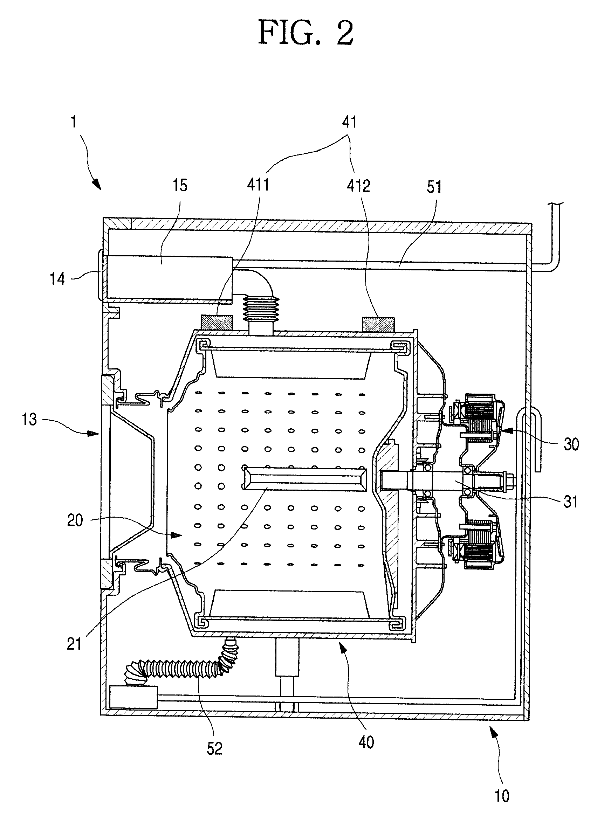

FIG. 2 is a longitudinal cross-sectional view of the washer.

As illustrated in the drawing, the cabinet 10 has a space formed therein, and a direct device, such as the motor 30 and the tub 40 in which the drum 20 is accommodated, which washes the laundry is provided at the space.

The motor 30 rotates a driving shaft 31 by a current applied from a power source part. The driving shaft 31 passes through the tub 40, is fixed to a rear surface of the drum 20, and rotates the drum 20. And the drum 20 has a shape which is opened toward an opposite side to a portion to which the driving shaft 31 is fixed, i.e., toward the door 13. Also, the tub 40 surrounds the drum 20, and is sealed so that washing water stored in the tub 40 is prevented from leaking.

Since the washing water should be stored in the tub 40 when a washing operation is performed, the tub 40 should be sealed. Here, the drum 20 is rotatably installed inside the tub 40. Also, a plurality of through-holes 22 are formed at the drum 20, and the through-holes 22 serve to enable the washing water to be supplied to a predetermined portion of the drum 20 when the washing water is supplied from a water supply pipe 51 to an inside of the tub 40. Also, by the through-holes 22, the washing water may be smoothly discharged from the drum 20 which is rotated during a spin-drying stroke after a washing stroke.

And the detergent drawer 15 is coupled to the water supply pipe 51 through which hot and cold water is supplied. The hot and cold water is introduced from the water supply pipe 51 into the detergent drawer 15, and thus the water which is mixed with a detergent and a fabric softener may be supplied.

Meanwhile, a vibration measuring device 41 is provided at an outer surface of the tub 40. The vibration measuring device 41 serves to measure vibration of the tub 40 generated when the washer 1 is operated, and may include an acceleration sensor or an optical sensor which is generally used to measure the vibration.

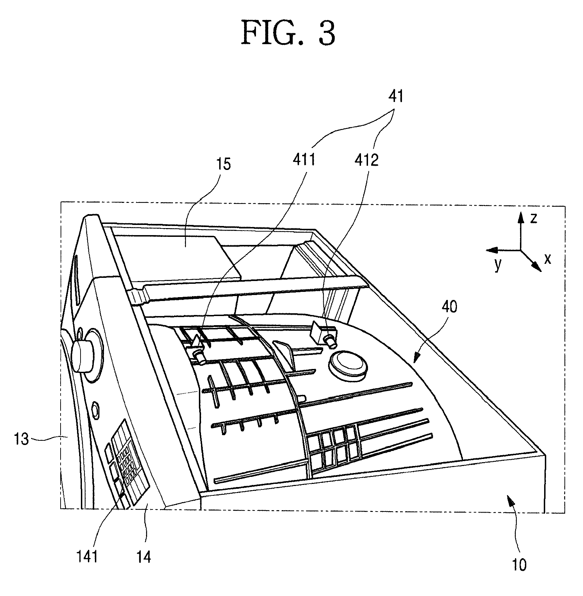

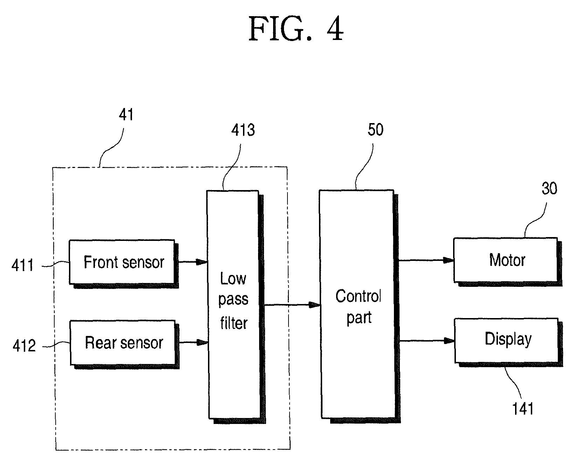

FIG. 3 is a view illustrating an upper surface inside the washer. And FIG. 4 is a block diagram illustrating a control signal flow in the washer.

As illustrated in the drawings, the vibration measuring device 41 includes a front sensor 411 which is provided at a first half portion of the outer surface of the tub 40, and a rear sensor 412 which is provided at a second half portion thereof, and thus may independently measure the vibration generated at the first half portion and the second half portion of the tub 40.

And the vibration measuring device 41 is provided at each of the first half portion and the second half portion of the tub 40, and a plurality of vibration measuring devices 41 may be installed along a circumference of the tub 40 on the same extension line. That is, a plurality of front sensors 411 and the rear sensors 412 are provided along the circumference of the first half portion and the second half portion of the tub 40, and may be provided at an upper end and a lower end of the tub 40 and a side surface between the upper end and the lower end of the tub 40, respectively.

The vibration measuring device 41 may further include a low pass filter 413 or a band pass filter which sorts out a signal. Therefore, the signal from each of the vibration measuring devices 41 may be transferred to a control part 50 via the low pass filter 413 or the band pass filter.

Accordingly, the control part 50 may calculate a size and a phase of the vibration measured by the vibration measuring devices 41 based on the input signal, may calculate a size of unbalance through the size of the vibration, i.e., an amplitude, and may also calculate a position of the unbalance through a phase difference.

Through the calculated size and position information of the unbalance, the control part 50 may determine whether a spin-drying operation is started or shorted. In particular, the position of the unbalance may be obtained even in a low RPM occurring at an initial state of the spin-drying operation or just before the spin-drying operation, and occurrence of large vibration at a resonance band may be estimated, and thus the spin-drying operation or a high speed rotation may be stopped.

Hereinafter, an operation of the drum type washer according to the embodiment of the present invention will be described with reference to the drawings.

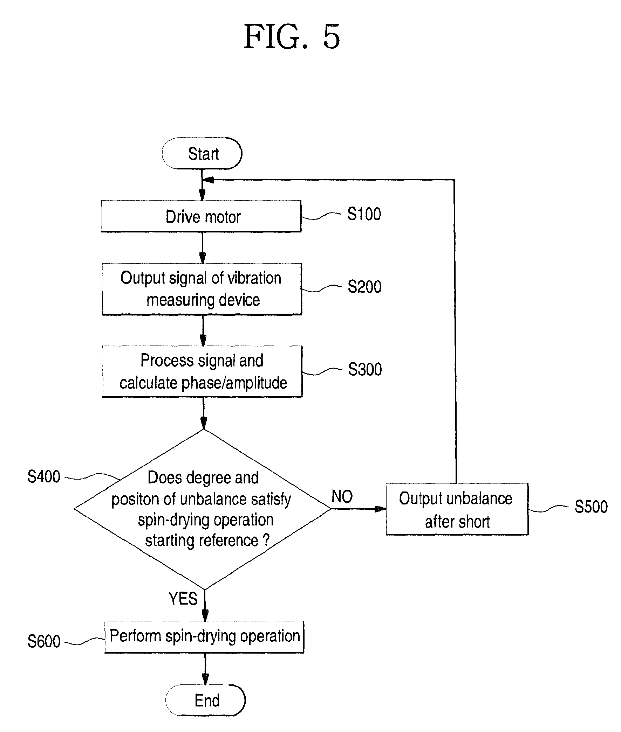

FIG. 5 is a flowchart sequentially illustrating an operation of the washer.

As illustrated in the drawing, when an operation of the washer is performed by a user, first, the weight of the laundry, i.e., a load accommodated in the drum 20 is determined, and an amount of water and a washing time appropriate to the laundry are determined.

A preset amount of water is supplied into the tub 40 through the water supply pipe 51, and thus the laundry in the drum 20 is soaked. At this point, the detergent and the fabric softener may be supplied into the drum 20 through the detergent drawer 15 connected to the water supply pipe 51.

After the preset amount of water is supplied, the drum 20 is normally or reversely rotated by driving of the motor 30. At this point, while a process in which the lifter 21 lifts up and then falls down the laundry in the drum 20 is repeated, washing of the laundry is performed.

And after the washing operation is completed, the water in the tub 40 is discharged through a discharge pipe 52, and the spin-drying operation is performed when the discharging of the water is completed. The motor 30 is driven in the low RPM at the early stage of the spin-drying operation or just before the spin-drying operation, and a vibration state before the real spin-drying operation is grasped [S100].

Specifically, when the drum 20 is rotated by the driving of the motor 30, the vibration is transmitted to the tub 40. At this point, the vibration of the tub 40 may be changed according to a state of the laundry accommodated in the drum 20, i.e., a position or a distribution of a laundry load, and the vibration measuring device 41 may effectively detect the vibration of the tub 40.

The vibration measuring device 41 detects the vibration of the first half portion of the tub 40 by the front sensors 411 provided at the first half portion of the tub 40, and also detects the vibration of the second half portion of the tub 40 by the rear sensors 412 provided at the second half portion of the tub 40 [S200].

The signal detected from each of the first half portion and the second half portion of the tub 40 is input to the low pass filter 413 or the band pass filter, and output signals from the front sensors 411 and the rear sensors 412 are classified according to certain frequencies so as to be easily determined. And data processed by the low pass filter 413 or the band pass filter is transferred to the control part 50, and the control part 50 may calculate the phase and the amplitude based on the input data [S300].

Meanwhile, the control part 50 compares the calculated phase and amplitude with a predetermined unbalance reference. When the amplitude calculated in the control part 50 is greater than a preset amplitude range, the control part 50 determines that the degree of the unbalance is deviated from a preset reference. And when the phase calculated in the control part 50 varies at a preset angle or more, the control part 50 determines that the position of the unbalance is deviated from a preset reference.

At this point, the position of the unbalance of each of the first half portion and the second half portion of the tub 40, i.e., an angular position between the unbalance of the first half portion of the tub 40 and the unbalance of the second half portion of the tub 40 may be grasped. When the position of the unbalance of the first half portion of the tub 40 and the position of the unbalance of the second half portion of the tub 40 are located to form an opposite angle, it may be estimated that the vibration becomes larger while the tub 40 is rotated at a high speed [S400].

When the control part 50 determines that the degree or the position of the unbalance is deviated from the preset reference, the control part 50 stops rotation of the motor 30, and shorts the spin-drying operation.

In this state, an unbalanced state may be displayed to the user through an output means such as the display 141 or a speaker (not shown). At this point, position information of the unbalance may be displayed through the output means, and the position information of the unbalance may be transferred to the user in detail so that a position of the laundry in the drum 20 may be easily rearranged [S500].

When the control part 50 determines that the degree or the position of the unbalance is deviated from the preset reference, and the rotation of the motor 30 is stopped, the user may open the door 13, and then rearrange the laundry in the drum 20. After the rearrangement of the laundry is completed, the user may operate again the washer 1, and thus the motor 30 is driven to start the spin-drying operation, and the vibration measuring device 41 measures a vibration signal.

Meanwhile, when the control part 50 determines that the degree or the position of the unbalance satisfies the preset reference, the control part 50 determines that the vibration of the tub 40 is within a normal operation range, and thus the spin-drying operation is performed.

And as the spin-drying operation is performed, the drum 20 is gradually rotated at the high speed. Since the degree or the position of the unbalance determined by the control part 50 is within the normal operation range, a rotation state may be stably maintained even in a resonance section, and the spin-drying operation may be normally terminated after a preset time [S600].

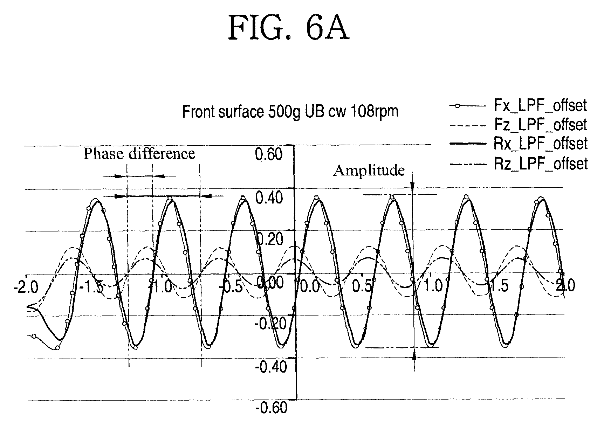

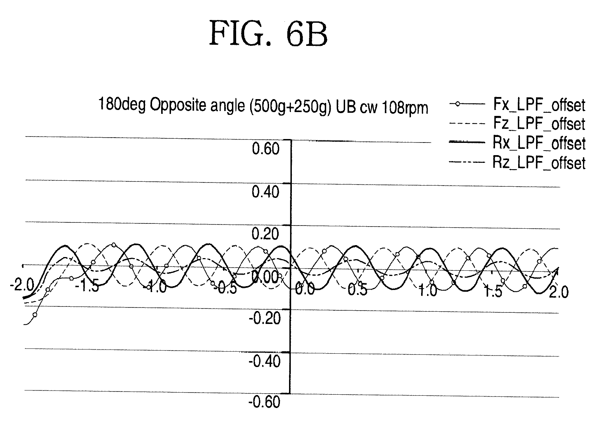

FIGS. 6A and 6B are graphs illustrating an unbalanced state measured by the vibration measuring device of the washer.

FIG. 6A is a graph illustrating the vibration state at each of the front sensor 411 and the rear sensor 412 in x and z-axial directions when the laundry is located at the first half portion and a load of 500g is located at the first half position and the tub 40 is rotated clockwise at 108 rpm.

As illustrated in the drawing, in the degree of the unbalance, since the load is located at the first half portion, it may be understood that the amplitude in the x-axial direction is greater than that in the z-axial direction, and thus the unbalance in the x-axial direction is also greater than that in the z-axial direction. And in the case of the z-axial direction, since the amplitude at the first half portion is greater than that at the second half portion, it may be understood that the unbalance at the first half portion is also greater than that at the second half portion.

FIG. 6B is a graph illustrating the vibration state at each of the front sensor 411 and the rear sensor 412 in x and z-axial directions when the laundry is diagonally located at the first half portion and the second half portion, a load of 500g is located at the first half position, a load of 259g is located at the second half position, the loads of the first half portion and the second half portion are arranged at an angle of 180°, and the tub 40 is rotated clockwise at 108 rpm.

As illustrated in the drawing, in the degree of the unbalance at each of the front sensor 411 and the rear sensor 412, it may be understood that the front sensor 411 and the rear sensor 412 have the same amplitude in the x-axial direction but the front sensor 411 has a greater amplitude in the z-axial direction. This is caused by a difference in the weight of the load, and is a natural phenomenon.

In the position of the unbalance at each of the front sensor 411 and the rear sensor 412, the front sensor 411 and the rear sensor 412 have the phase difference at all of x and z-axes, and thus it may be estimated that the vibration becomes greater at the high speed due to the phase difference.

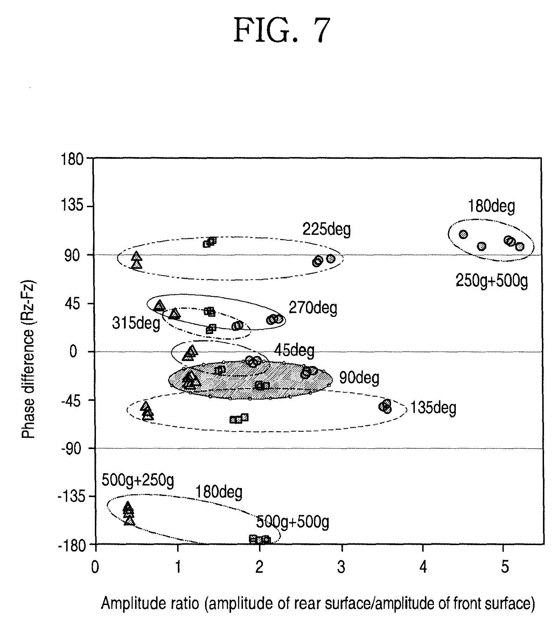

FIG. 7 is a graph illustrating a distribution of the unbalance measured by the vibration measuring device. Through the drawing, a correlation between the phase difference and an amplitude ratio according to an arrangement angle of the load and a forward and backward arrangement of the load may be understood.

As illustrated in the drawing, when the arrangement angle of the load which is arranged forward and backward, e.g., 315° or 45°, it may be understood that there is little phase difference and a stable rotation state is indicated. Also, since a range of the amplitude ratio is not great either, it may be estimated that the rotation is performed in a stable state even when the arrangement of the load is concentrated to the first half portion or the second half portion.

And when the arrangement angle of the load which is disposed forward and backward is gradually increased to e.g., 270° and 225° or 90° and 135°, the phase difference is gradually increased, and the amplitude ratio is relatively further increased, and thus there is a great difference in the amplitude ratio according to a rate of the load which is disposed at each of the first half portion and the second half portion

Meanwhile, when the arrangement angle of the load which is disposed forward and backward becomes 180° in the complete opposite direction, the loads are completely diagonally disposed. At this point, the phase difference becomes maximum. Also, it may be understood that there is a marked difference in the amplitude ratio according to whether the load is disposed to be concentrated to one side of the first half portion or the second half portion.

That is, it may be understood that when the arrangement of the load forms the opposite angle, the amplitude due to the rotation of the drum is increased, and the rotation is unstably performed at the high speed, and the vibration is remarkably increased, and thus it is substantially difficult to perform the spin-drying operation.

In the drum type washer according to the embodiment of the present invention, the degree of the unbalance can be obtained through the amplitude of the signals input from the plurality of vibration measuring devices provided at the first half portion and the second half portion of the tub, and also, the position of the unbalance can be obtained through the phase difference.

Therefore, when the degree and the position of the unbalance before the starting of the spin-drying operation exceed the preset reference, the starting of the spin-drying operation is stopped, and the user can rearrange the laundry in the drum to release the unbalance, and thus the generation of the vibration can be prevented. Even in the spin-drying operation in which the drum is rotated at the high speed, the drum can be maintained in a stable state, and the spin-drying time can be reduced.

In particular, while the laundry is diagonally dispersed, the vibration is small at the low RPM section or the normal section, but may be increased at the resonance section. However, the related art could not detect the increase of the vibration at the resonance section.

However, in the present invention, since the position of the unbalance can be accurately confirmed using the phase difference between the signals input from the vibration measuring devices, the unbalance which is diagonally spread can be detected before the resonance section, and thus the vibration can be prevented from being remarkably increased at the resonance section.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A drum type washer which comprises a cabinet (10) configured to form an external appearance, a tub (40) installed and fixed to an inside of the cabinet (10); a motor (30) rotatably provided at the tub (40), and a drum (20) disposed inside the tub (40) to accommodate laundry and rotated by the motor (30), **characterized by** comprising a vibration measuring device (41) provided at a first half portion and a second half portion of an outer surface of the tub (40), and configured to output a signal measured when the tub (40) is vibrated; and a control part (50) configured to calculate and process the signal transferred from the vibration measuring device (41), to calculate a degree of unbalance through an amplitude, and to calculate a position of the unbalance through a phase difference,
wherein, when the degree of the unbalance and the position of the unbalance does not satisfy a preset reference, the control part (50) stops driving of the motor (30), and shorts starting of a spin-drying operation.

2. The drum type washer according to claim 1, wherein the vibration measuring device (41) is one of an acceleration sensor and an optical sensor.

3. The drum type washer according to claim 1 or 2, wherein the vibration measuring device (41) comprises a front sensor (411) which is disposed at a first half portion of the tub (40); and a rear sensor (412) which is disposed at a second half portion of the tub (40), and
the front sensor (411) and the rear sensor (412) are disposed on the same extension line.

4. The drum type washer according to any one of claims 1 to 3, wherein the vibration measuring device (41) comprises a plurality of sensors, and the plurality of the sensors are disposed on the same extension line around the tub (40).

5. The drum type washer according to any one of claims 1 to 4, wherein the vibration measuring device (41) comprises a plurality of front sensors (411) which are disposed along a circumference of a first half portion of the tub (40); and a plurality of rear sensors (412) which are disposed along a circumference of a second half portion of the tub (40).

6. The drum type washer according to claim 5, wherein the vibration measuring device (41) further comprises a low pass filter (413) which filters each of values measured from the front sensors (411) and the rear sensors (412) into a certain frequency.

7. The drum type washer according to any one of claims 1 to 6, wherein, when the control part (50) calculates the phase difference, and the phase difference of a load is equal to or more than a present angle, it is determined that the load in the drum (20) is diagonally distributed.

8. The drum type washer according to any one of claims 1 to 7, further comprising an output means (141), such as a display or a speaker, which is connected to the control part (50) and displays an unbalanced state to an outside when a load of the laundry is in the unbalanced state.

9. The drum type washer according to any one of claims 1 to 8, wherein the control part (50) determines that a load from the vibration measuring device (41) is in an unbalanced state before the washer (1) starts a spin-drying operation.

10. A method of controlling a drum type washer, comprising the steps of:
(1) driving a motor (30) which rotates a drum (20) in which laundry is accommodated (S100);
(2) measuring vibration of a tub (40), in which the drum (20) is accommodated, through a vibration measuring device (41) provided at each of a first half portion and a second half portion of the tub (40) (S200);
(3) calculating a degree and a phase of unbalance of a load by processing and calculating a measured signal (S300); and
(4) comparing the calculated degree and phase of the unbalance with a preset spin-drying operation starting reference (S400),
wherein, in step (4), when the reference is not satisfied, step (5) of shorting a spin-drying operation (S500) is performed, and when the reference is satisfied, step (6) of performing the spin-drying operation (S600) is performed.

11. The method according to claim 10, wherein, in step (4), when a phase difference calculated in step (3) is equal to or more than a present angle, it is determined that a load of laundry is diagonally distributed in the drum (20), and the spin-drying operation is shorted.

12. The method according to claim 10 or 11, wherein, in step (5), a fact that a load of laundry is in an unbalanced state is output to a user through an output means (141).

13. The method according to any one of claims 10 to 12, wherein step (4) is in a low-speed rotation state before the spin-drying operation is started or at an early stage after the spin-drying operation is started.

14. The method according to any one of claims 10 to 13, wherein, in step (3), a degree of the unbalance of the load is calculated through an amplitude measured by the vibration measuring device (41 ).

15. The method according to any one of claims 10 to 14, wherein, in step (3), a signal input from the vibration measuring device (41) which is disposed on the same extension line around the tub (40) is measured and processed.
